# EUROPÄISCHE PATENTANMELDUNG

(11) **EP 1 616 465 A2**
(43) Veröffentlichungstag der Anmeldung: **18.01.2006**
(21) Anmeldenummer: 05019143.6
(22) Anmeldetag: 13.03.2001
(51) Int. Cl.: A01B 15/02

(54) **Bodenbearbeitungswerkzeug**

(30) Priorität: 18.03.2000 DE 10013621
(62) Teilanmeldung aus: 01106111.6
(71) Anmelder: Amazonen-Werke H. Dreyer GmbH & Co. KG, 49205 Hasbergen (DE)
(72) Erfinder: Gattermann, Bernd, 27798 Hude (DE); Pokriefke, Michael, 27798 Hude (DE); Reinke, Wilfried, 26123 Oldenburg (DE); Sosnicki, Jürgen, 04205 Leipzig (DE); Tiessen, Reiner Uwe, 26135 Oldenburg (DE)

(57) **Zusammenfassung**

Bodenbearbeitungswerkzeug für Bodenbearbeitungsgeräte mit einem Halm, an dessen unteren Ende ein Zinken mittels einer sich in Richtung des freien Ende des Zinken bzw. des Halmes verjüngenden Schafthalterung durch Reibschluß lösbar befestigt ist, wobei sich an das obere Ende des Zinkens ein Leitblech anschließt, welches ebenfalls mittels der sich verjüngenden Schafthalterung am Halm durch Reibschluß befestigbar ist.

## Beschreibung

Die Erfindung betrifft ein Bodenbearbeitungswerkzeug gemäß der Oberbegriffe der Patentansprüche 1 und 5.

Ein derartiges Bodenbearbeitungswerkzeug ist beispielsweise durch das US-PS 46 38 868 bekannt. Dieses Bodenbearbeitungswerkzeug ist mittels eines an einem Scharhalm angeschraubten Adapters über Reibschluß an der Schafthalterung befestigt.

Der Erfindung liegt die Aufgabe zugrunde, dieses bekannte Schar mit der Reibschlußverbindung weiterzubilden.

Diese Aufgabe wird erfindungsgemäß dadurch gelöst, daß sich an das obere Ende des Zinkens ein Leitblech anschließt, welches ebenfalls mittels der sich verjüngenden Scharhalterung am Halm durch Reibschluß befestigbar ist. Durch die Anordnung des Leitbleches an dem Schar läßt sich das Bodenbearbeitungswerkzeug für weitere Bodenbearbeitungsgeräte unterschiedliche Anforderungen einsetzen. Durch die Anordnung des Leitbleches mittels der Reibschlußverbindung kann das Leitblech genau so einfach wie der Zinken ausgewechselt werden.

Durch die DE-PS 36 28 910 ist ein Bodenbearbeitungswerkzeug bekannt, bei dem sich an das obere Ende des Zinkens ein Leitblech anschließt. Dieses Leitblech ist hier genauso wie der Zinken mittels Schraubverbindung am Scharhalm angeordnet. Aufgrund der Schraubverbindung ist das Auswechseln des Zinkens sowie des Leitbleches mühsam und zeitaufwendig.

Der Zinken sowie das Leitblech nach Erfindung lassen sich gemäß einem Ausführungsbeispiel über einen Adapter mittels Reibschluß an dem Scharhalm befestigen, wobei dieser Adapter am Halm einstückig angeordnet sein kann oder mittels Schrauben an dem Scharhalm befestigt ist.

Um bei einem Bodenbearbeitungswerkzeug mit seitlich abstehenden Flügelscharen die erfindungsgemäßen Vorteile anwenden zu können, ist vorgesehen, daß der Adapter seitlich abstehende Befestigungsteile aufweist, daß an diesen Befestigungsteilen seitlich abstehende Flügelschare angeschraubt sind. In einer vorteilhaften Weiterbildung der Erfindung sind die Flügelschare ebenfalls mittels der Reibschlußverbindung an dem Adapter befestigt.

In einfacher Weise lassen sich an dem Bodenbearbeitungswerkzeug, welches mittels Reibschlußverbindung angeordnete Zinken aufweist, die Teile dadurch in einfacher Weise anordnen, daß die Schafthalterung einen Adapter aufweist, welcher am Halm mittels Schrauben befestigt ist, und daß der Adapter seitlich abstehende Befestigungsteile aufweist, und daß an diesen Befestigungsteilen seitlich abstehende Flügelschare angeschraubt sind. Um bei einem als Flügelschar ausgebildeten Bodenbearbeitungswerkzeug in einfacher Weise das Leitblech und den Zinken austauschen zu können, die einem wesentlich größeren Verschleiß als die Flügelschare unterliegen, ist vorgesehen, daß die Flügelschare an dem Halm befestigt sind und einen Adapter aufweisen, an welchem mittels Reibschluß das Leitblech und der Zinken befestigbar sind.

Um weiterhin in einer vorteilhaften Ausgestaltung der Erfindung auch die Flügelschare leicht austauschen zu können, ist vorgesehen, daß an dem Adapter die Flügelschare, das Leitblech und der Zinken jeweils durch Reibschluß befestigbar sind.

Weitere Einzelheiten der Erfindung sind der Beispielsbeschreibung und den Zeichnungen zu entnehmen. Hierbei zeigen
- Fig. 1: das Bodenbearbeitungswerkzeug in Seitenansicht,
- Fig. 2: das Bodenbearbeitungswerkzeug gemäß Fig.1 in Seitenansicht, jedoch in Explosionsdarstellung,

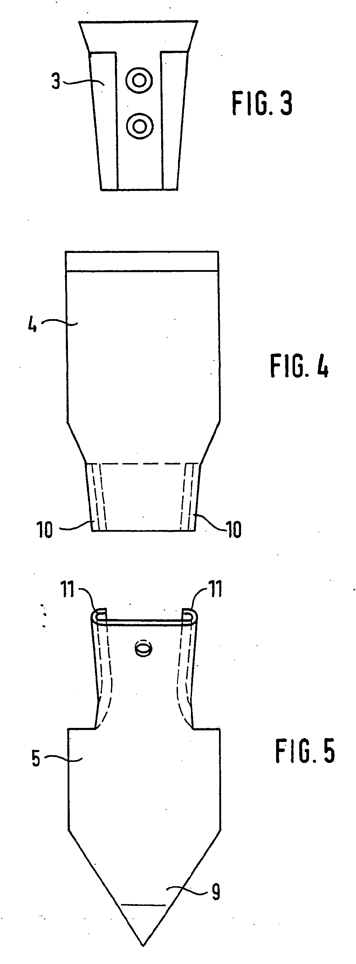

- Fig. 3: den Adapter gemäß Fig.1 und 2 in Vorderansicht,
- Fig. 4: das Leitblech des Bodenbearbeitungswerkzeuges gemäß Fig.1 und 2 in der Vorderansicht,
- Fig. 5: der Zinken des Bodenbearbeitungswerkzeuges gemäß Fig.1 und 2 in der Vorderansicht,
- Fig. 6: ein weiteres Leitblech in Vorderansicht eines Bodenbearbeitungswerkzeuges,
- Fig. 7: das Leitblech gemäß Fig. 6 in Seitenansicht,
- Fig. 8: der Adapter mit seitlich abstehenden Flügelscharen in der Vorderansicht,
- Fig. 9: den Adapter ohne Flügelschare in der Seitenansicht,
- Fig.10: der Zinken des Bodenbearbeitungswerkzeuges"
- Fig.11: der Zinken gemäß Fig.10 in Seitenansicht,
- Fig.12: ein Leitblech mit Adapter in der Vorderansicht,
- Fig.13: das Leitblech mit Adapter gemäß Fig.12 in Seitenansicht,
- Fig.14: das Flügelschar in der Vorderansicht,
- Fig.15: das Flügelschar gemäß Fig.14 in Seitenansicht,
- Fig.16: der Zinken entsprechend Fig. 10 und
- Fig.17: der Zinken gemäß Fig.16 in Seitenansicht.

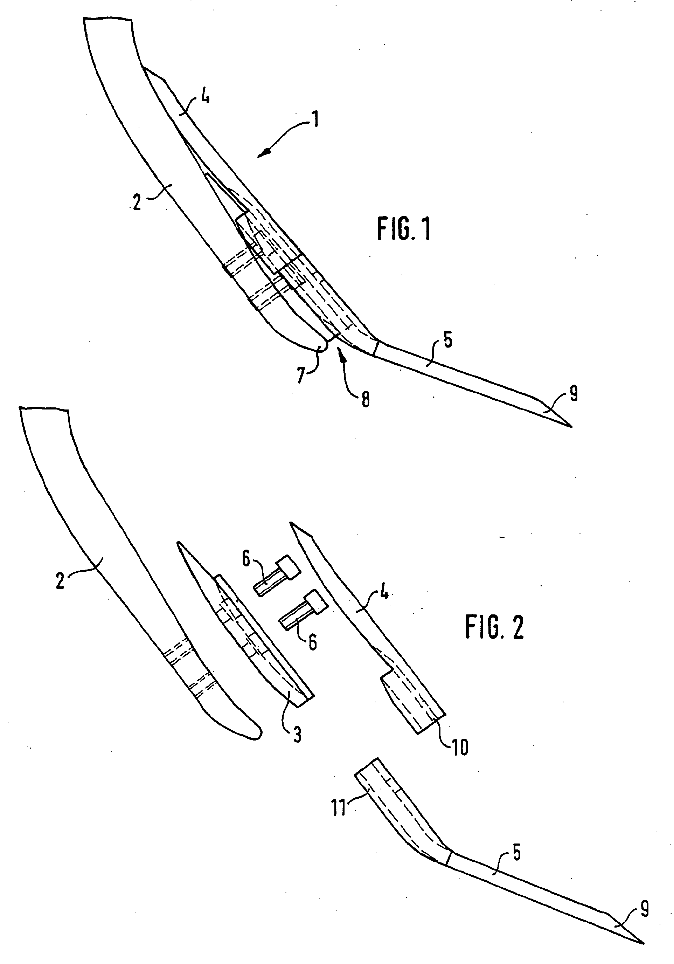

Das Bodenbearbeitungswerkzeug 1 gemäß Fig.1 und 2 ist für die Anordnung an Bodenbearbeitungsgeräten, beispielsweise Grubbern, vorgesehen. Das Bodenbearbeitungswerkzeug 1 weist den Halm 2, den Adapter 3, das Leitblech 4 und den Zinken 5 auf. An dem Halm 2 ist mittels der beiden Schrauben 6 der Adapter 3 befestigt. Dieser Adapter 3 bildet zusammen mit dem unteren Ende 7 des Halmes 2 eine Schafthalterung 8. Der Adapter 3 weist ein schwalbenschwanzähnliches Profil auf, welches sich nach oben vergrößert bzw. die sich nach unten in Richtung der Zinkenspitze 9 des Zinkens 5 verjüngt. Auf dem Adapter 3 ist zunächst das Leitblech 4 aufzuschieben und wird mittels der Befestigungselemente 10 und der sich nach unten verjüngenden Ausbildung der Schafthalterung 8 durch Reibschluß auf dem Adapter 3 gehalten. Anschließend wird der Zinken 5 mit seinen Halterungselementen 11 auf den Adapter 3 aufgeschoben und ebenfalls durch Reibschluß der Schafthalterung 8 gehalten. Somit sind sowohl das Leitblech 4 wie auch der Zinken 5 mittels einer formschlüssigen Reibschlußverbindung auf dem Adapter 3 befestigt. Das Auswechseln der verschlissenen Zinken 5 bzw. des Leitbleches 4 geschieht in umgekehrter Reihenfolge, in dem mittels eines Hammerschlages der Zinken 5 von oben von dem Adapter 3 abgeschlagen wird. Das Leitblech 4 wird ebenfalls ausgetauscht, wenn es verschlissen ist. Erfahrungen haben jedoch gezeigt, daß der Zinken 5 wesentlich häufiger als das Leitblech 4 aufgrund von Verschleiß ausgetauscht werden muß.

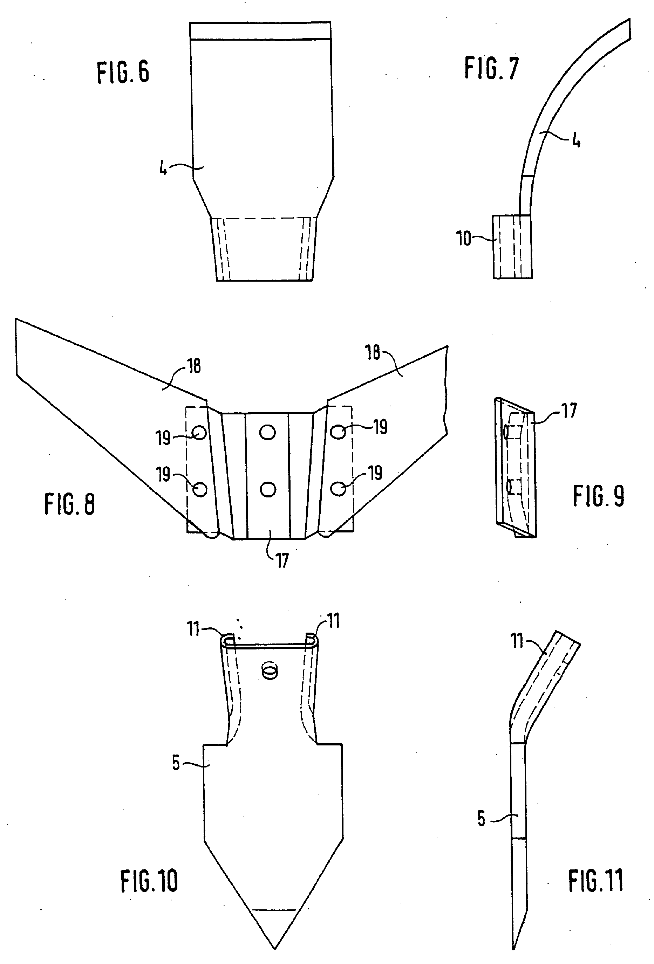

In den Fig.6 bis 11 ist ein weiteres Bodenbearbeitungswerkzeug dargestellt. Dieses Bodenbearbeitungswerkzeug weist das Leitblech 4, den Adapter 17 mit den seitlich abstehenden Flügelscharen 18 sowie den Zinken 5 auf. Zunächst wird der Adapter 17 mittels Schrauben, die durch die Bohrungen 16 gesteckt werden, an einem nicht dargestellten Halm befestigt. Anschließend werden mittels der Schraubbolzen 19 die Flügelschare 18 an dem Adapter 17 angeschraubt. Anschließend wird zunächst das Leitblech 4 von unten auf den Adapter 17 aufgesteckt und aufgrund der sich nach oben vergrößernden bzw. nach unten verjüngenden Führung durch Reibschluß gehalten. Anschließend wird der Zinken 5 aufgesteckt.

Es ist auch möglich, die Flügelschare 18 einstückig mit dem Adapter 17 auszubilden.

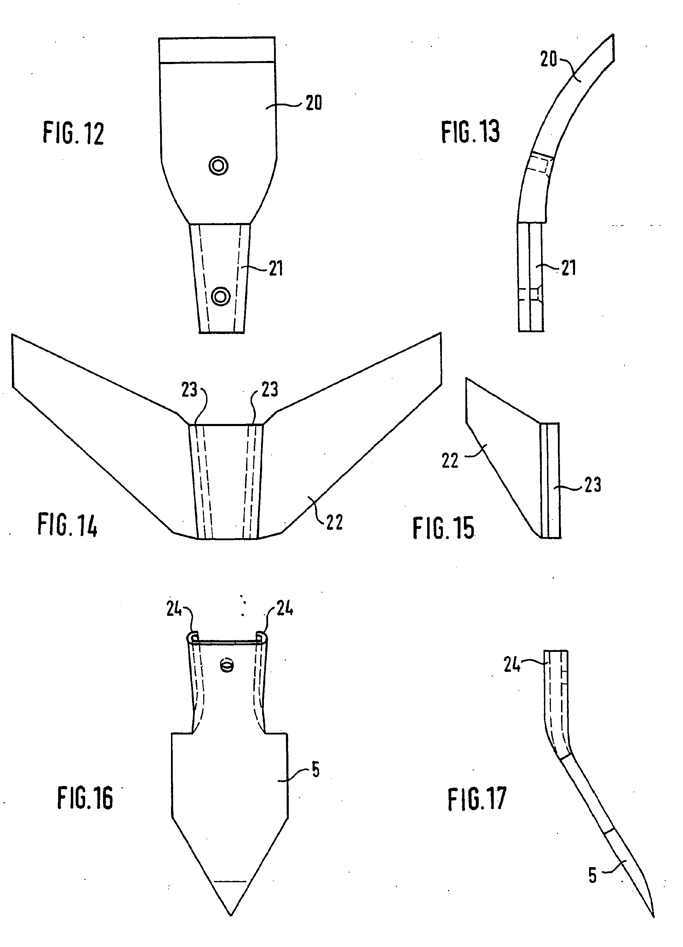

Ein weiteres Bodenbearbeitungswerkzeug zeigen die Fig.12 bis 17. Dieses Bodenbearbeitungswerkzeug besteht aus dem Leitblech 20 mit dem angeschmiedeten Adapterteil 21, dem zweiflügligen Flügelschar 22 gemäß Fig.14 und dem Zinken 5. Zunächst wird der Adapter 21 mit dem Leitblech 20 an einem nicht dargestellten Halm mittels Schraubbolzen befestigt. Anschließend wird das Flügelschar 22 mit den Befestigungsteilen 23 auf den Adapter 21, der an dem Leitblech 20 einstückig angeordnet ist, aufgeschoben. Anschließend wird der Zinken 5 auf der an dem Flügelschar 22 befindlichen Halterung 24, die sich nach unten verjüngt, aufgeschoben und durch Reibschluß gehalten.

## Patentansprüche

1. Bodenbearbeitungswerkzeug für Bodenbearbeitungsgeräte mit einem Halm, an dessen unteren Ende ein Zinken mittels einer sich in Richtung des freien Ende des Zinken bzw. des Halmes verjüngenden Schafthalterung durch Reibschluß lösbar befestigt ist, **dadurch gekennzeichnet, daß** sich an das obere Ende des Zinkens (5) ein Leitblech (4) anschließt, welches ebenfalls mittels der sich verjüngenden Schafthalterung (3, 8) am Halm (2) durch Reibschluß befestigbar ist.

2. Bodenbearbeitungswerkzeug nach Anspruch 1, **dadurch gekennzeichnet, daß** die Schafthalterung (3, 8) einen Adapter (3) aufweist, welcher am Halm (2) einstückig angeordnet ist.

3. Bodenbearbeitungswerkzeug nach Anspruch 1, **dadurch gekennzeichnet, daß** die Schafthalterung (3, 8) einen Adapter (3) aufweist, welcher am Halm (2) mittels Schrauben (6) befestigt ist.

4. Bodenbearbeitungswerkzeug nach Anspruch 2 oder 3, **dadurch gekennzeichnet, daß** der Adapter (17) seitlich abstehende Befestigungsteile aufweist, daß an diesen Befestigungsteilen seitlich abstehende Flügelschare (18) angeschraubt sind.

5. Bodenbearbeitungswerkzeug für Bodenbearbeitungsgeräte mit einem Halm, an dessen unteren Ende ein Zinken mittels einer sich in Richtung des freien Ende des Zinken bzw. des Halmes verjüngenden Schafthalterung durch Reibschluß lösbar befestigt ist, **dadurch gekennzeichnet, daß** die Schafthalterung einen Adapter (17) aufweist, welches am Halm (2) mittels Schrauben (6) befestigt ist, und daß der Adapter (17) seitlich abstehende Befestigungsteile aufweist, daß an diesen Befestigungsteilen seitlich abstehende Flügelschare (18) angeschraubt sind.

6. Bodenbearbeitungswerkzeug nach einem oder mehreren der vorstehenden Ansprüche, **dadurch gekennzeichnet, daß** die Flügelschare (18) an dem Halm (2) befestigt sind und einen Adapter aufweisen, an welchem mittels Reibschluß das Leitblech (4) und der Zinken (5) befestigbar sind.

7. Bodenbearbeitungswerkzeug nach einem oder mehreren der vorstehenden Ansprüche, **dadurch gekennzeichnet, daß** an dem Adapter die Flügelschare, das Leitblech und der Zinken durch Reibschluß befestigbar sind.
